# EUROPEAN PATENT APPLICATION

(11) **EP 4 822 791 A1**
(43) Date of publication of application: **14.10.2026**
(21) Application number: 25831128.1
(22) Date of filing: 12.06.2025
(51) Int. Cl.: H01M 10/04, H01M 50/406, B65H 45/101

(54) **MANUFACTURING METHOD FOR ELECTRODE ASSEMBLY**

(30) Priority: 20.06.2024 KR 20240080635
(71) Applicant: LG Energy Solution, Ltd., Seoul 07335 (KR)
(72) Inventor: OH, Eun, Daejeon 34122 (KR); LEE, Hyung Woon, Daejeon 34122 (KR); HWANG, Hong Ju, Daejeon 34122 (KR); KIM, Jongcheon, Daejeon 34122 (KR)
(74) Representative: Plasseraud IP
(86) International application number: PCT/KR2025/008093
(87) International publication number: WO 2025/263914

(57) **Abstract**

The present invention relates to a method for completing an electrode assembly by finishing an electrode laminate formed by zigzag stacking with a separator. More specifically, the present invention relates to a specific method for cutting a separator and winding the same onto an electrode assembly.

## Description

### [TECHNICAL FIELD]

This application claims the benefit of priority based on Korean Patent Application No. 10-2024-0080635 filed on June 20, 2024, entire content disclosed in the document of the patent applications is included as a part of this specification.

The present invention relates to a manufacturing method of electrode assembly and an apparatus therefor for forming an electrode assembly by finishing an electrode laminate formed through zigzag stacking.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used. Additionally, a plurality of such battery modules may be integrated to constitute a battery pack with higher output and larger capacity.

Meanwhile, as a type of unit secondary battery cell, cylindrical, prismatic and pouch-type battery cells are known. Since it is desirable to manufacture medium-to-large-sized battery modules as small and light as possible, prismatic batteries and pouch-type batteries that may be stacked with a high degree of integration and have a small weight per capacity are mainly used as battery cells for medium-to-large-sized battery modules.

Among these, pouch-type battery cells are manufactured by accommodating an electrode assembly in a pouch. The electrode assembly includes an anode and a cathode alternately stacked with a separator interposed therebetween. Such electrode assemblies have various structures depending on the manufacturing method. Recently, high-capacity stack cell-type electrode assemblies have been manufactured at high speed using the zigzag stacking method, which alternately stacks anodes and cathodes between each layer of a separator folded in a zigzag pattern.

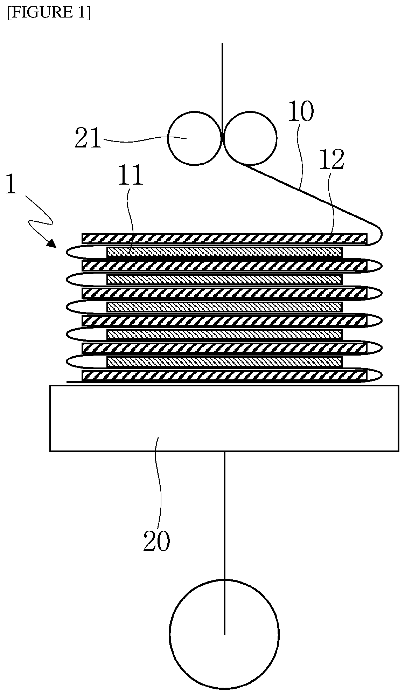

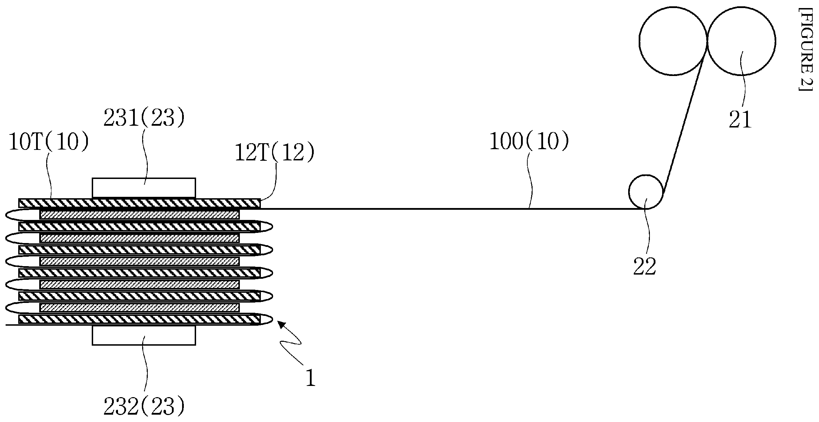

FIG. 1 illustrates an electrode laminate after zigzag stacking is completed, and FIG. 2 illustrates an unfolded portion of a separator after the electrode laminate is pulled. Referring to FIGS. 1 and 2, the electrode laminate 1 is formed by stacking an anode 11 and a cathode 12 on a stack table 20 along with a separator 10 continuously supplied from a nip roll 21 and zigzag-folded. Here, for the energy efficiency of the battery, the number of stacked cathode 12 is greater than that of the anode 11 by one, and accordingly, the total number of electrodes is an odd number.

The electrode laminate 1 formed in this way is pulled by a gripper 23 while being gripped, and the separator 10 is additionally unfolded from the nip roll 21 to form an unfolded portion 100 of the separator for finishing the electrode laminate 1. The unfolded portion 100 of the separator receives tension from a tension roll 22 and is maintained in a taut state.

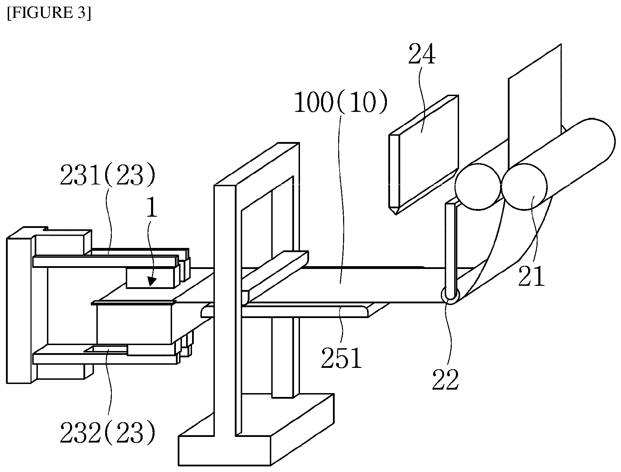

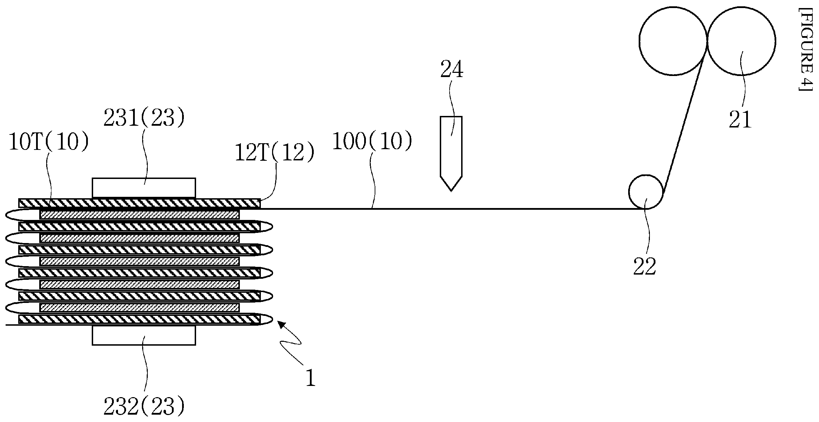

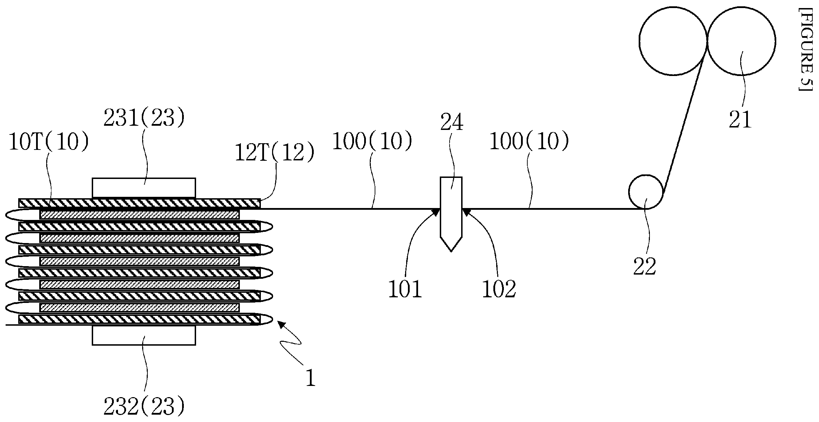

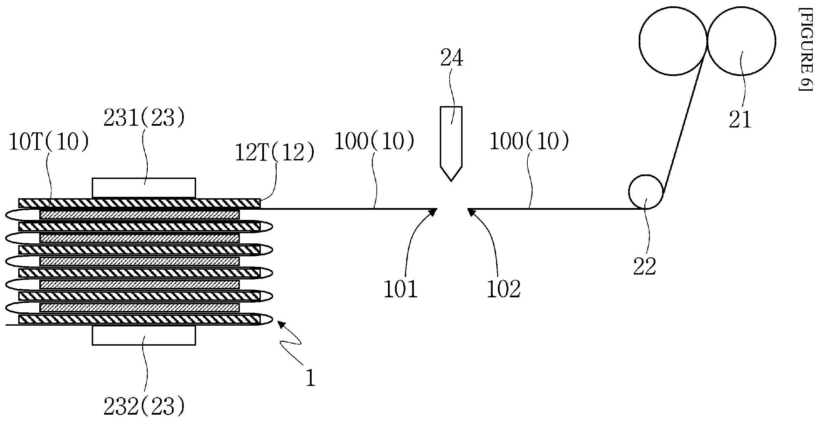

FIG. 3 illustrates a separator cutting apparatus, and FIGS. 4 to 7 illustrate a process of cutting the unfolded portion of the separator. Referring to FIGS. 3 to 7, the unfolded portion 100 of the separator is thermally cut by a cutter 24 while being tensioned between a gripper 23 and the tension roll 22. Specifically, as shown in FIGS. 4 to 6, the cutter 24 is lowered from above the unfolded portion 100 of the separator and then lifted, thereby cutting the unfolded portion 100 of the separator to form a first end 101 on the electrode laminate 1 side and a second end 102 on the tension roll 22 side.

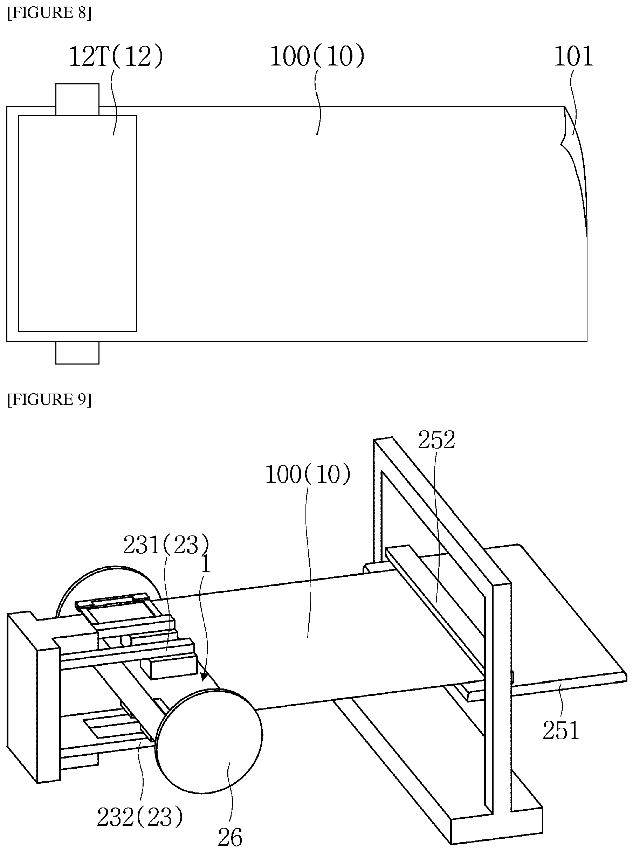

FIG. 8 illustrates a thermally deformed first end of the unfolded portion of the separator. Referring to FIG. 8, while the cutter 24 is moving up and down as shown in FIGS. 4 to 6, heat generated from the cutter 24 is continuously transmitted to the first end 101 and the second end 102. Such strong heat may cause thermal deformation of the first end 101 and the second end 102 beyond cutting the separator 10. In this case, the dimensions or appearance of the completed electrode assembly may be poor, and problems such as short circuits caused by poor finishing may also occur, which is a serious problem that requires resolution.

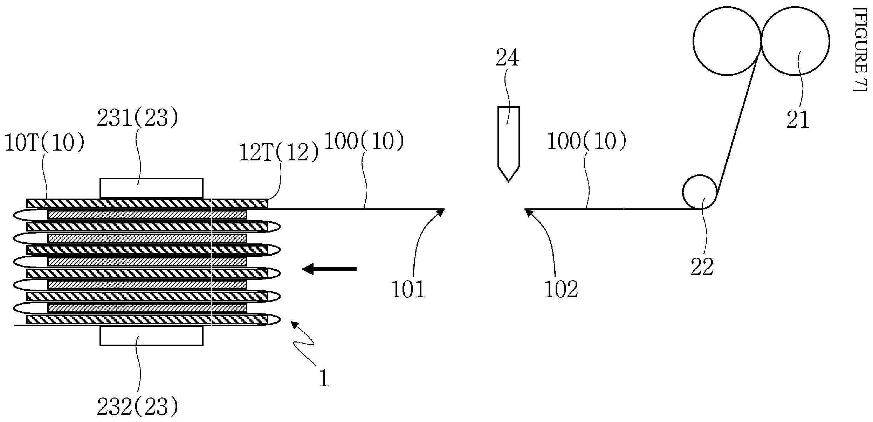

Meanwhile, after the unfolded portion 100 of the separator is cut by the cutter 24, as shown in FIG. 7, the electrode laminate 1 is pulled by the gripper 23 to undergo a winding process. Here, the tension roll 22 side where the second end 102 of the cut unfolded portion 100 of the separator is formed is fixed to the stack table 20 again and used for manufacturing the electrode laminate 1. For the circulation of such process, the pulling direction of the electrode laminate 1 must be the same as the direction in which the end of the lowermost layer of the separator, i.e., the second end 102, is facing, and the uppermost electrode 12T of the electrode laminate 1 is stacked on the uppermost layer 10T of the separator.

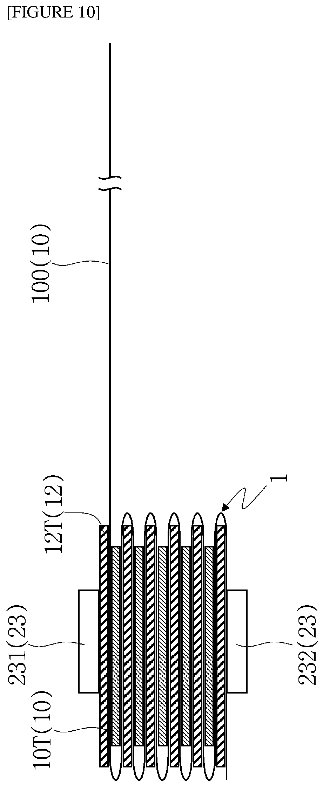

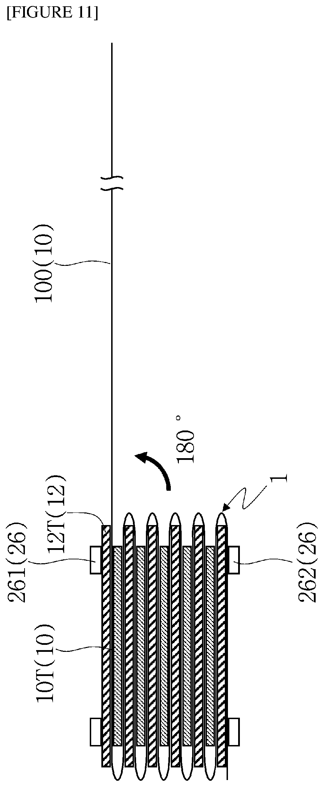

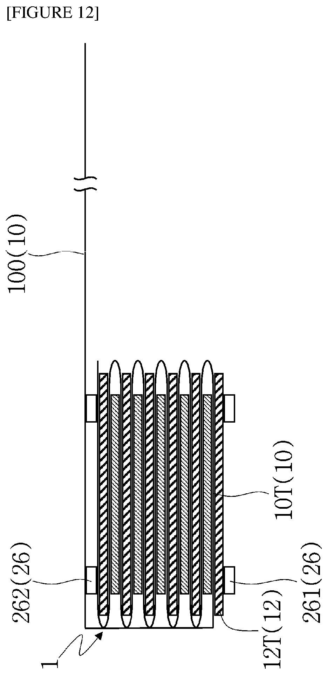

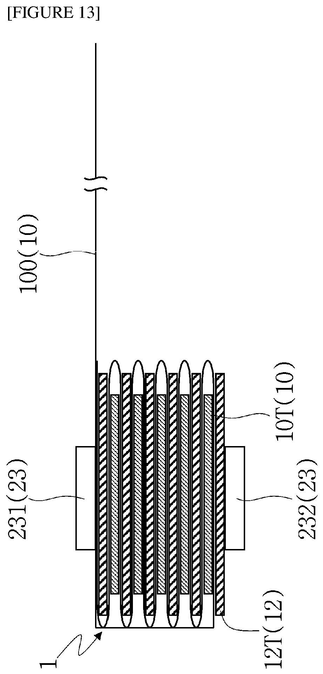

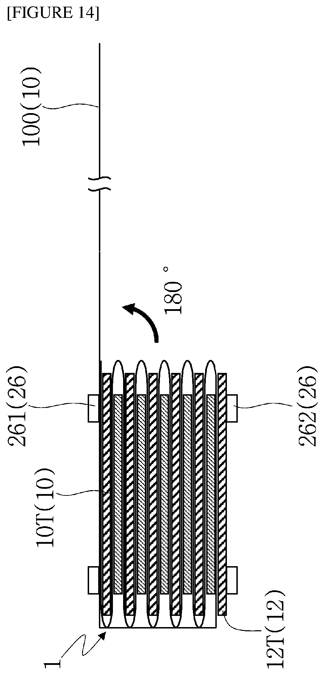

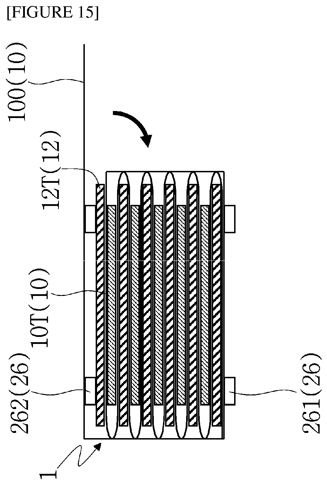

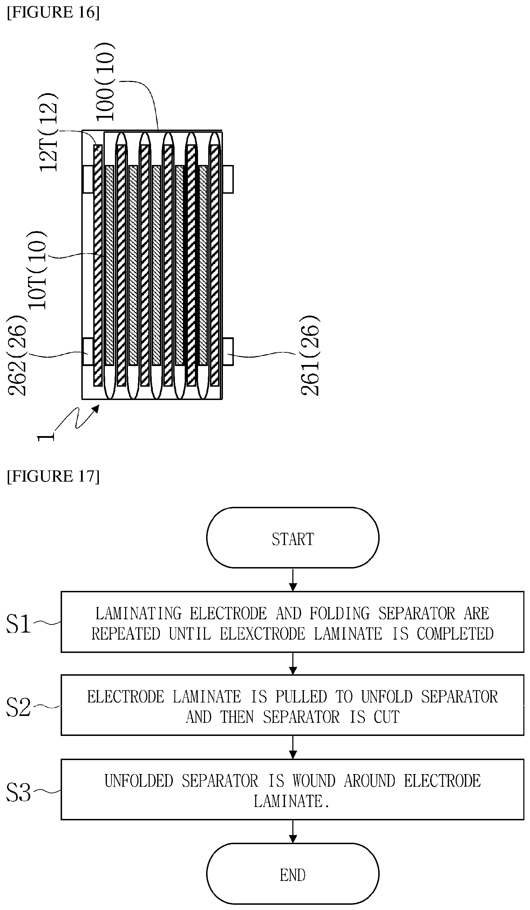

FIG. 9 illustrates a separator winding apparatus, and FIGS. 10 to 16 illustrate a process for winding an unfolded portion of the separator onto an electrode laminate. Referring to FIGS. 9 to 16, the winding process is established by the rotation the mandrel 26 that alternately grip the electrode laminate 1 with of the gripper 23. Specifically, the winding process proceeds in the following order: a step in which the gripper 23 grips and pulls the electrode laminate 1 (FIG. 10); a step in which the mandrel 26 grips and rotates the electrode laminate 1 by 180 degrees (FIGS. 11 and 12); a step in which the mandrel 26 returns to the original position thereof while the gripper 23 grips the electrode laminate 1 (FIG. 13); a step in which the mandrel 26 grips and further rotates the electrode laminate 1 by 180 degrees (FIGS. 14 and 15); and a step in which the remaining portion of the unfolded portion 100 of the separator is brushed to be brought into contact with the electrode laminate 1 (FIG. 16).

During these processes, electrode particles are smeared onto the gripper 23 and mandrel 26 from the surface of the uppermost electrode 12T. In particular, since the mandrel 26 is exposed to sliding friction with the uppermost electrode 12T when ungrips, a lot of electrode particles may be smeared. The problem lies in that the gripper 23 and mandrel 26 come into contact with the separator 10 again with electrode particles still smeared thereon. Specifically, the upper gripper 231 that was in contact with the uppermost electrode 12T in FIG. 10 comes into contact with the separator 10 in FIG. 13, the upper mandrel 261 that was in contact with the uppermost electrode 12T in FIG. 11 comes into contact with the separator 10 in FIG. 14, the lower gripper 232 that was in contact with the uppermost electrode 12T in FIG. 13 comes into contact with the separator 10 in FIG. 10, and the lower mandrel 262 that was in contact with the uppermost electrode 12T in FIG. 14 comes into contact with the separator 10 in FIG. 11. During these processes, when electrode particles adhere to the surface of the separator 10, not only a poor appearance but also performance problems such as a short circuit or reduced battery efficiency may occur. Therefore, the problem of such electrode particles adhering is also a task that must be solved.

### [DISCLOSURE]

### [TECHNICAL PROBLEM]

In order to solve above-described problems, it is an object of the present invention to provide a separator cutting method that prevents defects in an electrode assembly caused by thermal deformation of the separator, and a separator cutting apparatus used therefor.

It is another object of the present invention to provide a separator winding method that prevents defects caused by electrode particles adhering to the separator.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a separator cutting apparatus including: a tension roll that provides tension to an unfolded portion of the separator unfolded from the electrode laminate; a gripper that grips the electrode laminate while being pulled by the tension roll; a cutter that thermally cuts the unfolded portion of the separator by being lowered from above the unfolded portion of the separator with the unfolded portion of the separator tensioned between the electrode laminate and the tension roll; and a controller that controls the separator cutting apparatus such that a first end of the separator provided at the electrode laminate side moves relative to the cutter in a first direction away from the cutter after the cutter is lowered and before the cutter is lifted.

According to the present invention, since the first end avoids the cutter immediately after cutting the unfolded portion of the separator, thermal deformation of the first end due to increased contact time between the first end and the cutter may be prevented.

The first direction preferably intersects the lifting direction of the cutter. Accordingly, the contact time between the first end and the cutter being lifted is minimized.

The gripper may be configured to pull the electrode laminate away from the tension roll. Accordingly, the first end may move away from the cutter.

The gripper may be configured to move in the first direction. Accordingly, the first end may also move in the first direction relative to the cutter.

According to an embodiment of the present invention, According to an embodiment of the present invention, the gripper is configured to pull the electrode laminate, and the separator cutting apparatus may further include a guide that guides the first end to move in the first direction while the gripper pulls the electrode laminate. Here, the direction in which the gripper pulls the electrode laminate does not have to be a direction away from the cutter, and may not include a first direction component. For example, even when the gripper pulls the electrode laminate downward while the guide supports the unfolded portion of the separator from thereunder, the first end may move along the guide in the first direction.

According to a modified example, the cutter may be configured to move in the direction opposite to the first direction in a lowered state. That is, the relative movement between the first end and the cutter may be achieved by the cutter moving with respect to the first end.

According to an embodiment of the present invention, the tension roll may be positioned above the unfolded portion of the separator and horizontally spaced apart from the cutter. Accordingly, at the moment the unfolded portion of the separator is cut, the second end may sag due to gravity and move away from the cutter, thereby avoiding thermal deformation due to increased contact time with the cutter.

According to a modified example, the controller may be configured to control the separator cutting apparatus such that the tension roll moves relative to the cutter in the second direction away from the cutter. That is, the second end may avoid contact with the cutter as the tension roll moves away from the cutter.

Preferably, the second direction intersects the lifting direction of the cutter. Accordingly, the contact time between the second end and the cutter being lifted may be minimized.

The present invention also provides a separator cutting method including: a pulling step in which the gripper grips and pulls the electrode laminate to form the unfolded portion of the separator between the electrode laminate and the tension roll; an avoidance step in which the first end of the separator formed on the electrode laminate side moves relative to the cutter in the first direction away from the cutter; and a cutter lifting step in which the cutter is lifted back to a position before lowering.

According to the present invention, since the first end avoids the cutter immediately after cutting the unfolded portion of the separator, thermal deformation of the first end due to increased contact time between the first end and the cutter may be prevented.

The first direction preferably intersects the lifting direction of the cutter. Accordingly, the contact time between the first end and the cutter being lifted is minimized.

In the avoidance step, the gripper may pull the electrode laminate away from the tension roll. Accordingly, the first end may move away from the cutter.

Alternatively, in the avoidance step, the gripper may pull the electrode laminate while moving in the first direction. Accordingly, the first end may also move in the first direction relative to the cutter.

According to an embodiment of the present invention, in the avoidance step, the gripper pulls the electrode laminate, and accordingly, the first end may move in the first direction along the guide. Here, the direction in which the gripper pulls the electrode laminate does not have to be a direction away from the cutter, and may not include a first direction component. For example, even when the gripper pulls the electrode laminate downward while the guide supports the unfolded portion of the separator from thereunder, the first end may move along the guide in the first direction.

According to a modified example, in the avoidance step, the cutter may move in the direction opposite to the first direction. That is, the relative movement between the first end and the cutter may be achieved by the cutter moving with respect to the first end.

According to a modified example, the separator cutting method may further include, between the cutter lowering step and the cutter lifting step, a step in which the tension roll moves relative to the cutter in a second direction. That is, the second end may avoid contact with the cutter as the tension roll moves away from the cutter.

Preferably, the second direction intersects the lifting direction of the cutter. Accordingly, the contact time between the second end and the cutter being lifted may be minimized.

The present invention also provides a separator winding method of finishing an electrode laminate formed by stacking electrodes on each layer of a zigzag-folded separator with the separator, including: a fixing step of fixing an end of an unfolded portion of the separator to an end fixing part, the unfolded portion of the separator extending in one widthwise direction from an uppermost layer of the separator stacked directly under an uppermost electrode; a gripping step of gripping and lifting an electrode laminate in a manner that an upper mandrel and a lower mandrel extending in lengthwise direction are in contact with an uppermost electrode and a lowermost layer of the separator, respectively; a first winding step of winding the unfolded portion of the separator to surround four sides of the electrode laminate by rotating the electrode laminate 360 degrees counterclockwise with the upper mandrel and the lower mandrel when viewed with an extending direction of the unfolded portion of the separator facing rightward; and an ungripping step of ungripping the electrode laminate by the upper mandrel and the lower mandrel escaping from the electrode laminate in the lengthwise direction.

According to the present invention, in the process of winding the separator on the electrode laminate, the upper mandrel in contact with the uppermost electrode does not come into contact with the separator such that contamination of the separator due to electrode particles from the uppermost electrode or the risk of a short circuit due to the contamination may be prevented.

The separator winding method according to an embodiment of the present invention may further include a second winding step of re-covering the unfolded portion of the separator with a side surface of the electrode laminate as the electrode laminate is further rotated 90 degrees after the first winding step.

Here, after the second winding step, the separator winding method may further include an attachment step of: releasing the end of the unfolded portion of the separator; and attaching, to at least a portion of a bottom surface of the electrode laminate, a portion of the unfolded portion of the separator remaining after covering the side surface of the electrode laminate. Here, the attachment may include all types of adhesion using a binder, fusion and temporary attachment by static electricity, etc.

In the attachment step, the unfolded portion of the separator may be brushed so as to come into contact with the bottom surface of the electrode laminate. Accordingly, the pouch insertability of the electrode laminate may be improved and the dimensions may be consistent.

According to an embodiment of the present invention, the separator winding method may further include, after the ungripping step, a returning step of returning the upper mandrel and the lower mandrel to same positions as before gripping the electrode laminate. That is, after the separator winding method is performed and before a new separator winding process is started, the upper mandrel, which has electrode particles from the uppermost electrode adhered thereto, is placed again on the upper side such that the bottom surface of the upper mandrel comes into contact only with the uppermost electrode, and the electrode particles do not contaminate the separator.

The separator winding method according to a modified example may further include, immediately after the first winding step, an attachment step of: releasing the end of the unfolded portion of the separator; and attaching, to at least a portion of a side surface of the electrode laminate, a portion of the unfolded portion of the separator remaining after covering the four sides of the electrode laminate. That is, in this case, the unfolded portion of the separator may be attached directly to the side surface rather than to the bottom surface after covering the side surface of the electrode laminate.

In the attachment step, the unfolded portion of the separator may be brushed so as to come into contact with the side surface of the electrode laminate in the attachment step.

The upper mandrel may escape from the electrode laminate along the lengthwise direction after contact with the uppermost electrode may be released in the ungripping step. That is, the upper mandrel may escape the electrode laminate without exerting a normal force on the surface of the uppermost electrode by being spaced apart from the uppermost electrode. Accordingly, the upper mandrel is not exposed to sliding friction with the uppermost electrode such that the amount of electrode particles adhering to the upper mandrel is minimized.

The separator winding method may further include a first particle removing step of removing electrode particles adhering to a bottom surface of the upper mandrel after the ungripping step. Accordingly, contamination of the separator due to the electrode particles adhering to the upper mandrel may be more effectively prevented.

The separator winding method according to an embodiment of the present invention may further include: a pulling step of pulling the electrode laminate by gripping the electrode laminate vertically with a gripper to the unfolded portion of the separator prior to the fixing step; and an ungripping step of the gripper ungripping the electrode laminate after the gripping step.

Here, the gripper may not re-grip the electrode laminate after the ungripping step. That is, the surface of the gripper in contact with the uppermost electrode does not come into contact with the separator such that contamination of the separator by electrode particles is prevented.

The separator winding method may further include a second particle removing step of removing electrode particles adhering to a surface of the gripper after the ungripping step. Accordingly, contamination of the separator due to electrode particles adhered to the gripper may be more effectively prevented.

### [ADVANTAGEOUS EFFECTS]

The present invention provides a separator cutting method in which the end formed by cutting an unfolded portion of the separator avoids thermal deformation by avoiding the cutter immediately after cutting. Specifically, the present invention provides a separator cutting apparatus and method in which both the first end and the second end of the unfolded portion of the separator avoid thermal deformation.

The present invention also provides a separator winding method in which contamination of the separator and resulting defects caused by contact between a gripper and/or a mandrel in sliding friction with the electrode and the separator are prevented.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates an electrode laminate after zigzag stacking is completed.
FIG. 2 illustrates an unfolded portion of a separator after the electrode laminate is pulled.
FIG. 3 illustrates a separator cutting apparatus.
FIGS. 4 to 7 illustrate a process of cutting the unfolded portion of the separator.
FIG. 8 illustrates a thermally deformed first end of the unfolded portion of the separator.
FIG. 9 illustrates a separator winding apparatus.
FIGS. 10 to 16 illustrate a process for winding an unfolded portion of the separator onto an electrode laminate.
FIG. 17 illustrates a manufacturing process of an electrode assembly according to an embodiment of the present invention.
FIG. 18 illustrates a separator cutting apparatus according to an embodiment of the present invention, and FIG. 19 illustrates a separator cutting method according to an embodiment of the present invention.
FIGS. 20 to 23 illustrate a cutting process of an unfolded portion of the separator according to an embodiment of the present invention.
FIG. 24 illustrates a separator winding method according to an embodiment of the present invention, and FIG. 25 illustrates a separator winding apparatus according to an embodiment of the present invention.
FIGS. 26 to 31 illustrate a winding process of an unfolded portion of the separator according to an embodiment of the present invention.

### [DESCRIPTION OF REFERENCE NUMERALS]

1: electrode laminate
10: separator
10T: uppermost layer of the separator
100: unfolded portion of the separator
101: first end
102: second end
11: first electrode (anode)
12: second electrode (cathode)
12T: uppermost electrode
20: stack table
21: nip roll
22: tension roll
23: gripper
231: upper gripper
232: lower gripper
24: cutter
251: guide
252: end fixing part
26: mandrel
261: upper mandrel
262: lower mandrel

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Herein, a method for manufacturing an electrode assembly is exemplified. Specifically, the present invention relates to a finishing process for completing an electrode assembly by finishing an electrode laminate with a separator in a manufacturing method for an electrode assembly according to an embodiment of the present invention. The finishing process specifically includes unfolding and cutting a separator, and winding the same around the electrode laminate to complete the assembly.

Hereinafter, preferred embodiments of the present invention will be described with reference to the accompanying drawings.

### [MANUFACTURING PROCESS OF ELECTRODE ASSEMBLY AND LAMINATING STEP]

FIG. 17 illustrates a manufacturing process of an electrode assembly according to an embodiment of the present invention. Referring to FIG. 17, the manufacturing process of an electrode assembly according to an embodiment of the present invention includes: a laminating step S1 of laminating a separator and an electrode to form an electrode laminate; a cutting step S2 of pulling the electrode laminate to unfold the separator and then cutting the same; and a winding step S3 of winding the separator around the electrode laminate.

FIG. 1 illustrates an electrode laminate after zigzag stacking is completed. Referring to FIG. 1, in the laminating step S1 according to an embodiment of the present invention, the electrode laminate 1 is formed by alternately stacking a first electrode 11 and a second electrode 12 on each layer of a separator 10 that is continuously supplied from a nip roll 21 and zigzag-folded on a stack table 20. While there are various zigzag stacking methods for forming such structure, the present invention is irrelevant to specific zigzag stacking methods.

The first electrode 11 and the second electrode 12 may be one or the other of an anode and a cathode. According to an embodiment of the present invention, the first electrode 11 is an anode and the second electrode 12 is a cathode.

According to an embodiment of the present invention, the number of the second electrodes 12 is greater than that of the first electrodes 11 by one. Accordingly, the total number of electrodes 11 and 12 is an odd number, and the uppermost layer and the lowermost layer are second electrodes 12.

### [SEPARATOR CUTTING APPARATUS AND SEPARATOR CUTTING METHOD]

Referring back to FIG. 17, the cutting step S2 according to an embodiment of the present invention may be performed using the separator cutting method described below.

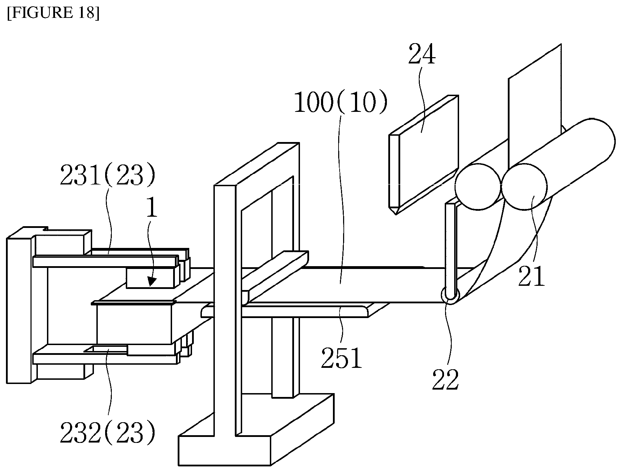

FIG. 18 illustrates a separator cutting apparatus according to an embodiment of the present invention. Referring to FIG. 18, the separator cutting apparatus according to an embodiment of the present invention includes: a tension roll 22 that provides tension to an unfolded portion 100 of the separator unfolded from the electrode laminate 1; a gripper 23 that grips the electrode laminate 1 while being pulled by the tension roll 22; a cutter 24 that thermally cuts the unfolded portion 100 of the separator by being lowered from above the unfolded portion 100 of the separator with the unfolded portion 100 of the separator tensioned between the electrode laminate 1 and the tension roll 22; and a controller (not shown) that controls the separator cutting apparatus such that a first end 101 of the separator provided at the electrode laminate 1 side moves relative to the cutter 24 in a first direction away from the cutter 24 after the cutter 24 is lowered and before the cutter 24 is lifted.

The separator 10 may be continuously supplied through the nip roll 21. Here, the tension roll 22 may be positioned between the nip roll 21 and the electrode laminate 1 along the running direction of the separator 10, or may be the nip roll 21 itself.

The gripper 23 may be provided as a pair including an upper gripper 231 and a lower gripper 232, and may grip and lift the electrode laminate 1 from both upper and lower sides thereof.

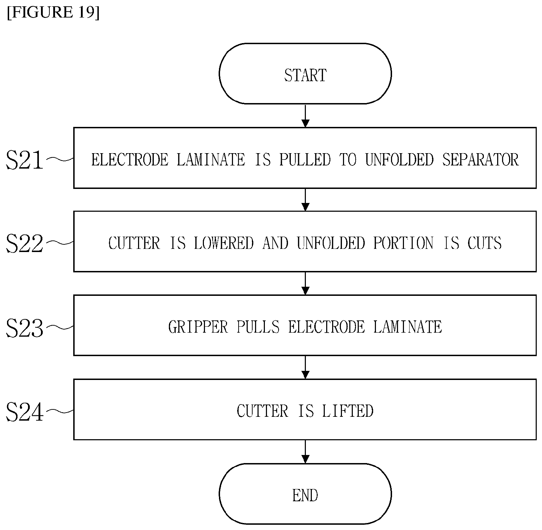

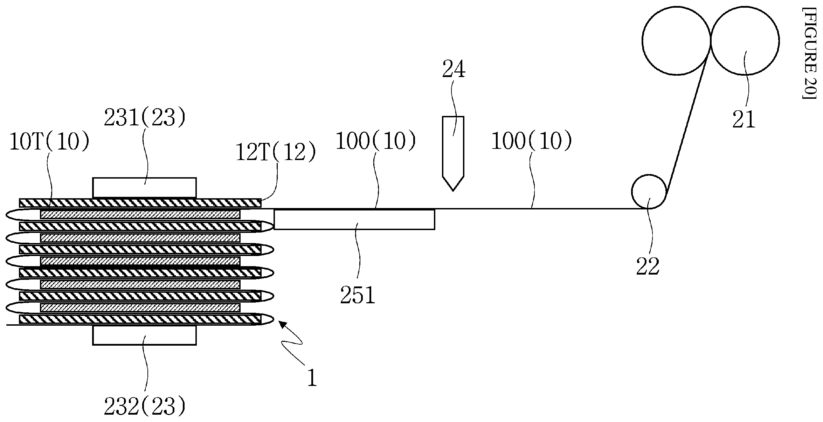

FIG. 19 illustrates a separator cutting method according to an embodiment of the present invention, and FIGS. 20 to 23 illustrate a cutting process of an unfolded portion of the separator according to an embodiment of the present invention.

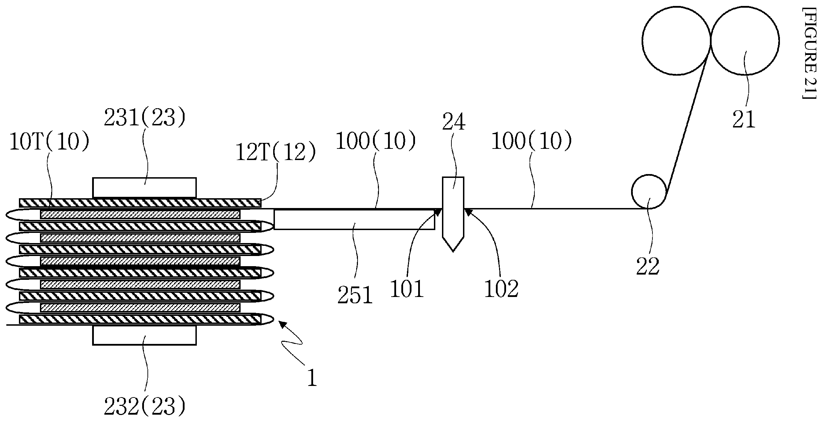

Referring to FIGS. 20 and 21, the separator cutting method according to an embodiment of the present invention includes: a pulling step S21 in which the gripper 23 grips and pulls the electrode laminate 1 to form the unfolded portion 100 of the separator between the electrode laminate 1 and the tension roll 22; and a cutter lowering step S22 in which the cutter 24 is lowered from above the unfolded portion 100 of the separator and cuts the unfolded portion 100 of the separator.

Here, in the cut unfolded portion 100 of the separator, the first end 101 is formed on the electrode laminate 1 side, and a second end 102 is formed on the nip roll 21 side.

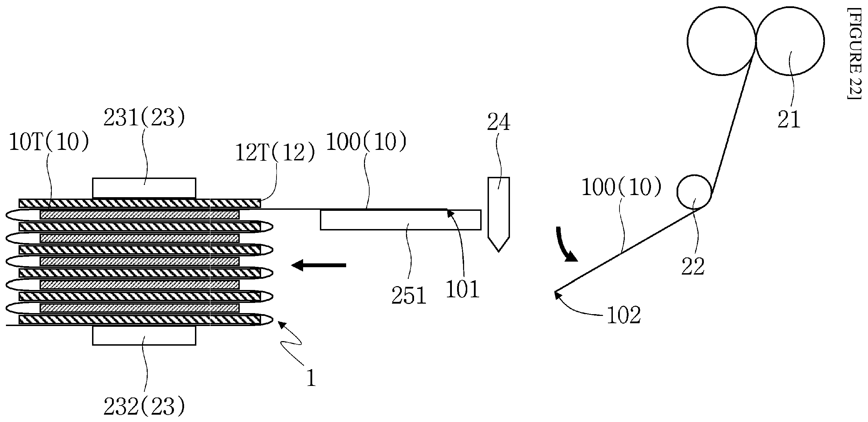

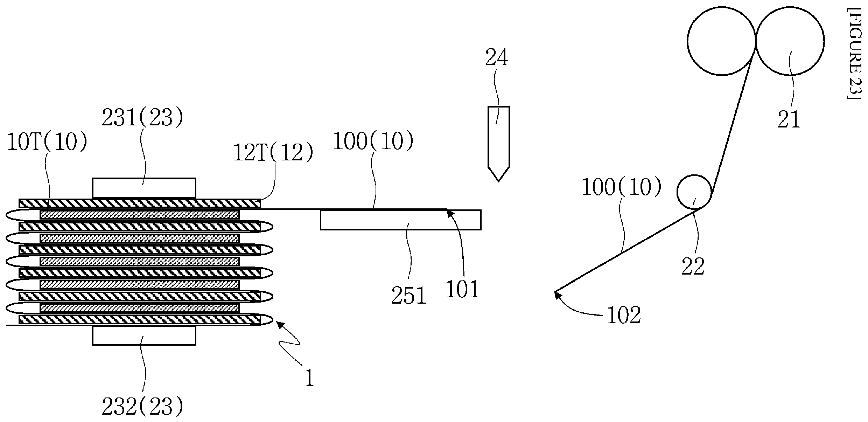

Referring to FIGS. 22 and 23, a separator cutting method according to an embodiment of the present invention sequentially includes: an avoidance step S23 in which the first end 101 of the separator formed on the electrode laminate 1 side moves relative to the cutter 24 in the first direction away from the cutter 24; and a cutter lifting step S24 in which the cutter 24 is lifted back to a position before lowering.

According to an embodiment of the present invention, by avoiding the first end 101 from the cutter 24 before the cutter 24 is lifted, the first end 101 of the separator may be prevented from being excessively heated and thermally deformed during the process in which the cutter 24 is lifted back to the original position thereof.

The first direction preferably intersects the lifting direction of the cutter 24. Accordingly, the contact time between the first end 101 and the cutter 24 being lifted may be minimized. When the first direction is parallel to the lifting direction of the cutter 24, it may be difficult for the first end 101 to avoid the contact with the cutter 24.

Referring back to FIG. 18, the gripper 23 may be configured to pull the electrode laminate 1 away from the tension roll 22.

In addition, the gripper 23 may be configured to move in the first direction. Accordingly, the first end 101 may also move in the first direction relative to the cutter 24.

According to an embodiment of the present invention, the gripper 23 is configured to pull the electrode laminate 1, and the separator cutting apparatus may further include a guide 251 that guides the first end 101 to move in the first direction while the gripper 23 pulls the electrode laminate 1.

Referring back to FIGS. 21 and 22 along with FIG. 18, in the avoidance step S23 according to an embodiment of the present invention, the gripper 23 pulls the electrode laminate 1, and accordingly, the first end 101 may move in the first direction along the guide 251. Here, the direction in which the gripper 23 pulls the electrode laminate 1 does not have to be a direction away from the cutter 24, and may not include a first direction component. For example, even when the gripper 23 pulls the electrode laminate 1 downward while the guide 251 supports the unfolded portion 100 of the separator from thereunder, the first end 101 may move along the guide 251 in the first direction.

According to a modified example, the cutter 24 may be configured to move in the direction opposite to the first direction in a lowered state, and in the avoidance step S23, the cutter 24 may move in the direction opposite to the first direction. That is, the relative movement between the first end 101 and the cutter 24 may be achieved by the cutter 24 moving with respect to the first end 101.

Referring back to FIG. 18, the tension roll 22 according to an embodiment of the present invention may be positioned above the unfolded portion 100 of the separator and horizontally spaced apart from the cutter 24. Accordingly, as shown in FIG. 22, at the moment the unfolded portion 100 of the separator is cut, the second end 102 may sag due to gravity and move away from the cutter 24, thereby avoiding thermal deformation due to increased contact time with the cutter 24.

According to a modified example, the separator cutting method may further include, between the cutter lowering step S22 and the cutter lifting step S24, a step in which the tension roll 22 moves relative to the cutter 24 in a second direction away from the cutter 24, and the controller may be configured to control the separator cutting apparatus such that the tension roll 22 moves relative to the cutter 24 in the second direction away from the cutter 24. That is, the second end 102 may avoid contact with the cutter 24 as the tension roll 22 moves away from the cutter 24.

Here, the second direction preferably intersects the lifting direction of the cutter 24. Accordingly, the contact time between the second end 102 and the cutter being lifted 24 may be minimized.

### [SEPARATOR WINDING APPARATUS AND SEPARATOR WINDING METHOD]

Referring back to FIG. 17, the winding step S3 according to an embodiment of the present invention may be performed using the separator winding method described below.

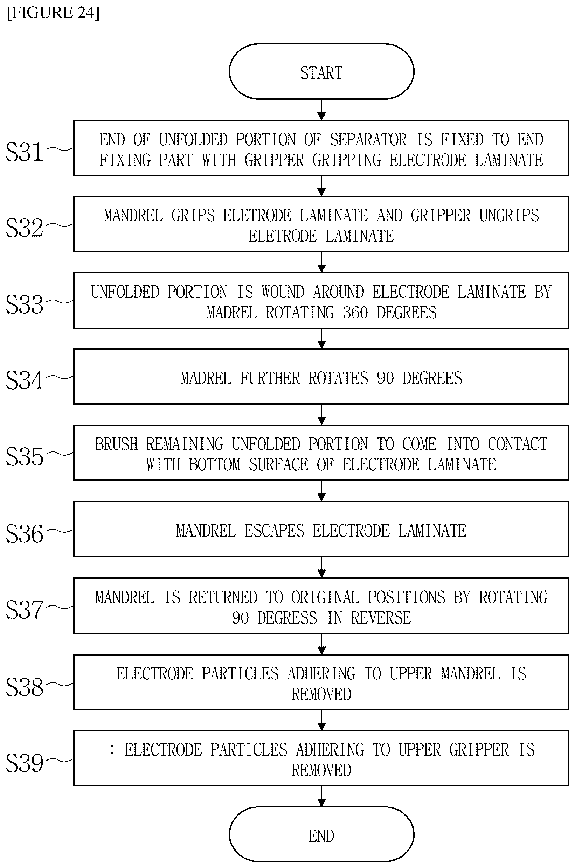

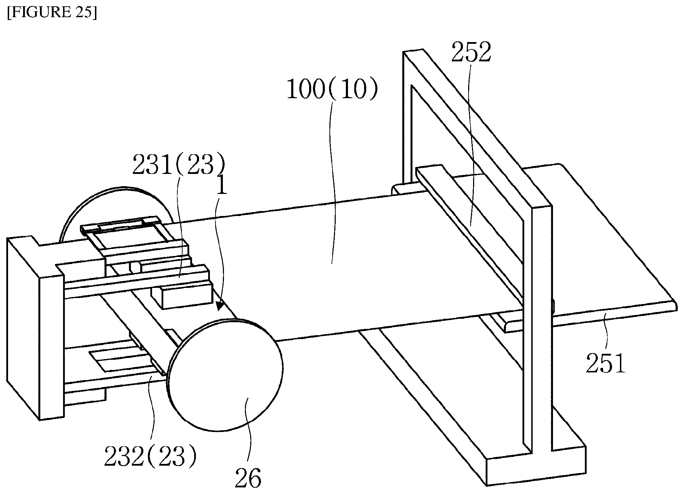

FIG. 24 illustrates a separator winding method according to an embodiment of the present invention, and FIG. 25 illustrates a separator winding apparatus according to an embodiment of the present invention. Referring to FIGS. 24 and 25, the separator winding apparatus according to an embodiment of the present invention includes: a gripper 23 that grips the electrode laminate 1; an end fixing part 252 to which the end of the unfolded portion 100 of the separator is fixed; and a mandrel 26 configured to grip and rotate the electrode laminate 1.

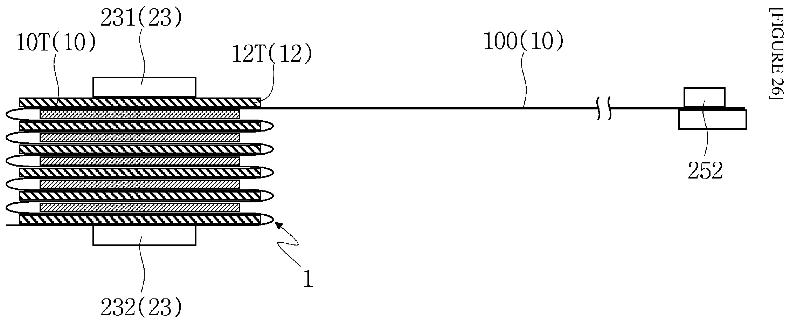

FIGS. 26 to 31 illustrate a winding process of an unfolded portion of the separator according to an embodiment of the present invention.

Referring to FIG. 26, the separator winding method according to an embodiment of the present invention includes a fixing step S31 of fixing an end of an unfolded portion 100 of the separator to an end fixing part 252, the unfolded portion 100 of the separator extending in one widthwise direction. In the fixing step S31, the unfolded portion 100 of the separator may be appropriately tensioned and maintained taut between the end fixing part 252 and the electrode laminate 1.

In the fixing step S31, the electrode laminate 1 may be gripped vertically by the gripper 23. Here, the upper gripper 231 constituting the gripper 23 may be in contact with an uppermost electrode 12T. Accordingly, electrode particles may adhere to the bottom surface of the upper gripper 231.

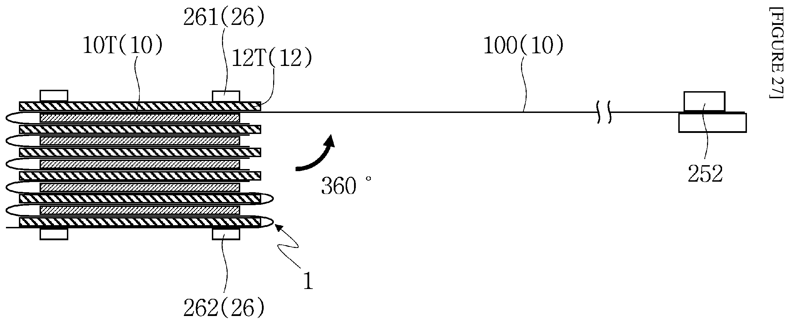

Referring to FIG. 27, the separator winding method according to an embodiment of the present invention includes a gripping step S32 of gripping and lifting an electrode laminate 1 in a manner that an upper mandrel 261 and a lower mandrel 262 extending in lengthwise direction are in contact with an uppermost electrode 12T and a lowermost layer of the separator 100, respectively.

After the gripping step S32 is performed, the gripper 23 may ungrip the electrode laminate 1. According to an embodiment of the present invention, the gripper 23 does not grip the electrode laminate 1 again until the winding process is completed. Accordingly, there is no risk of electrode particles remaining on the bottom surface of the upper gripper 231 contaminating the separator 10.

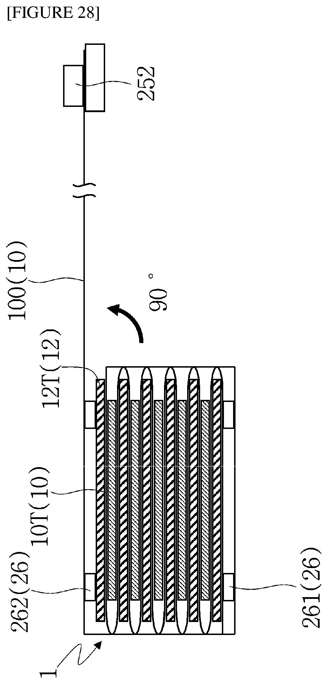

Referring to FIGS. 27 and 28, the separator winding method according to an embodiment of the present invention includes a first winding step S3 of winding the unfolded portion 100 of the separator to surround four sides of the electrode laminate 1 by rotating the electrode laminate 1 360 degrees counterclockwise with the upper mandrel 261 and the lower mandrel 262 when viewed with an extending direction of the unfolded portion 100 of the separator facing rightward.

Here, the four sides of the electrode laminate 1 may be finished at once without the mandrel 26 and the gripper 23 gripping and then re-gripping the electrode laminate 1. Accordingly, there is no risk of electrode particles adhering to the mandrel 26 and/or the gripper 23 contaminating the separator 10.

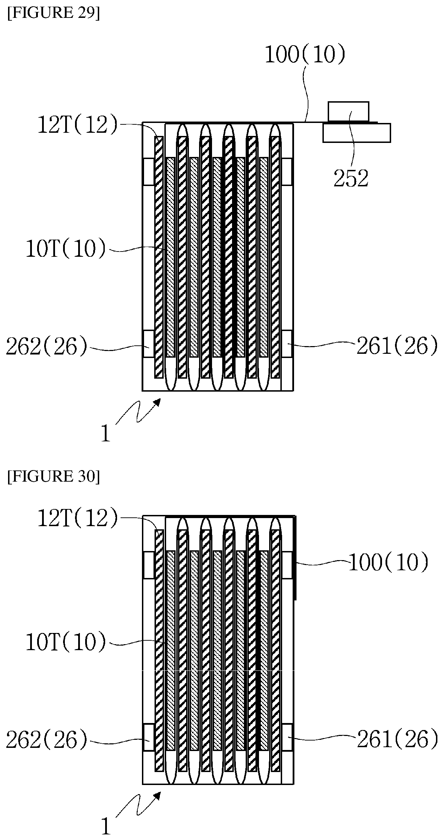

Referring to FIG. 29, the separator winding method according to an embodiment of the present invention may further include a second winding step S34 of re-covering the unfolded portion 100 of the separator with a side surface of the electrode laminate 1 as the electrode laminate 1 may be further rotated 90 degrees after the first winding step S33.

The separator winding method may further include, after the second winding step S34, an attachment step S35 of: releasing the end of the unfolded portion 100 of the separator; and attaching, to at least a portion of a bottom surface of the electrode laminate 1, a portion of the unfolded portion 100 of the separator remaining after covering the side surface of the electrode laminate 1.

In the attachment step S35, the unfolded portion 100 of the separator may be brushed so as to come into contact with the bottom surface of the electrode laminate 1. Accordingly, the pouch insertability of the electrode laminate 1 may be improved and the dimensions may be consistent.

The separator winding method according to a modified example may further include, immediately after the first winding step S33, an attachment step S35 of: releasing the end of the unfolded portion 100 of the separator; and attaching, to at least a portion of a side surface of the electrode laminate 1, a portion of the unfolded portion 100 of the separator remaining after covering the four sides of the electrode laminate 1. That is, in this case, the unfolded portion 100 of the separator may be attached directly to the side surface rather than to the bottom surface after covering the side surface of the electrode laminate 1.

In the attachment step S35, the unfolded portion 100 of the separator may be brushed so as to come into contact with the side surface of the electrode laminate 1.

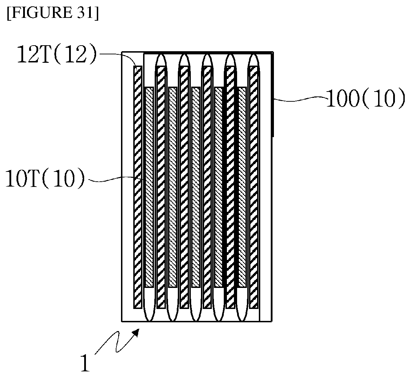

Referring to FIG. 31, the separator winding method according to an embodiment of the present invention includes an ungripping step S36 of ungripping the electrode laminate 1 by the upper mandrel 261 and the lower mandrel 262 escaping from the electrode laminate 1 in the lengthwise direction.

According to an embodiment of the present invention, after the mandrel 26 ungrips the electrode laminate 1, the mandrel 26 does not grip the electrode laminate 1 again. Accordingly, the upper mandrel 261, which is in contact with the uppermost electrode 12T, does not come in contact with the separator 10 such that contamination of the separator 10 due to electrode particles from the uppermost electrode 12T or the risk of a short circuit due to the contamination may be prevented.

The upper mandrel 261 may escape from the electrode laminate 1 along the lengthwise direction after contact with the uppermost electrode 12T may be released in the ungripping step S36. That is, the upper mandrel 261 may escape the electrode laminate 1 without exerting a normal force on the surface of the uppermost electrode 12T by being spaced apart from the uppermost electrode 12T. Accordingly, the upper mandrel 261 is not exposed to sliding friction with the uppermost electrode 12T such that the amount of electrode particles adhering to the upper mandrel 261 is minimized.

Referring back to FIG. 24, the separator winding method according to an embodiment of the present invention may further include, after the ungripping step S36, a returning step S37 of returning the upper mandrel 261 and the lower mandrel 262 to same positions as before gripping the electrode laminate 1. That is, after the separator winding method is performed and before a new separator winding process is started, the upper mandrel, which has electrode particles from the uppermost electrode 12T adhered thereto, is placed again on the upper side such that the bottom surface of the upper mandrel 261 comes into contact only with the uppermost electrode 12T, and the electrode particles do not contaminate the separator 10.

The separator winding method may further include a first particle removing step S38 of removing electrode particles adhering to a bottom surface of the upper mandrel 261 after the ungripping step S36. Accordingly, contamination of the separator 10 due to the electrode particles adhering to the upper mandrel 261 may be more effectively prevented.

The separator winding method may further include a second particle removing step S39 of removing electrode particles adhering to a surface of the gripper 23 after the gripper ungrips the electrode laminate 1. Accordingly, contamination of the separator 10 due to the electrode particles adhering to the gripper 12 may be more effectively prevented.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A separator winding method of finishing an electrode laminate formed by stacking electrodes on each layer of a zigzag-folded separator with the separator, comprising:
a fixing step of fixing an end of an unfolded portion of the separator to an end fixing part, the unfolded portion of the separator extending in one widthwise direction from an uppermost layer of the separator stacked directly under an uppermost electrode;
a gripping step of gripping and lifting an electrode laminate in a manner that an upper mandrel and a lower mandrel extending in lengthwise direction are in contact with an uppermost electrode and a lowermost layer of the separator, respectively;
a first winding step of winding the unfolded portion of the separator to surround four sides of the electrode laminate by rotating the electrode laminate 360 degrees counterclockwise with the upper mandrel and the lower mandrel when viewed with an extending direction of the unfolded portion of the separator facing rightward; and
an ungripping step of ungripping the electrode laminate by the upper mandrel and the lower mandrel escaping from the electrode laminate in the lengthwise direction.

2. The separator winding method of claim 1, further comprising a second winding step of re-covering the unfolded portion of the separator with a side surface of the electrode laminate as the electrode laminate is further rotated 90 degrees after the first winding step.

3. The separator winding method of claim 2, further comprising, after the second winding step, an attachment step of: releasing the end of the unfolded portion of the separator; and attaching, to at least a portion of a bottom surface of the electrode laminate, a portion of the unfolded portion of the separator remaining after covering the side surface of the electrode laminate.

4. The separator winding method of claim 3, wherein the unfolded portion of the separator is brushed so as to come into contact with the bottom surface of the electrode laminate in the attachment step.

5. The separator winding method of claim 2, further comprising, after the ungripping step, a returning step of returning the upper mandrel and the lower mandrel to same positions as before gripping the electrode laminate.

6. The separator winding method of claim 1, further comprising, immediately after the first winding step, an attachment step of: releasing the end of the unfolded portion of the separator; and attaching, to at least a portion of a side surface of the electrode laminate, a portion of the unfolded portion of the separator remaining after covering the four sides of the electrode laminate.

7. The separator winding method of claim 6, wherein the unfolded portion of the separator is brushed so as to come into contact with the side surface of the electrode laminate in the attachment step.

8. The separator winding method of claim 1, wherein the upper mandrel escapes from the electrode laminate along the lengthwise direction after contact with the uppermost electrode is released in the ungripping step.

9. The separator winding method of claim 1, further comprising a first particle removing step of removing electrode particles adhering to a bottom surface of the upper mandrel after the ungripping step.

10. The separator winding method of claim 1, further comprising: a pulling step of pulling the electrode laminate by gripping the electrode laminate vertically with a gripper to the unfolded portion of the separator prior to the fixing step; and
an ungripping step of the gripper ungripping the electrode laminate after the gripping step.

11. The separator winding method of claim 10, wherein the gripper does not re-grip the electrode laminate after the ungripping step.

12. The separator winding method of claim 10, further comprising a second particle removing step of removing electrode particles adhering to a surface of the gripper after the ungripping step.
